(19) Europäisches Patentamt
European Patent Office
Office européen des brevets

(11) **EP 4 322 018 A1**

(12) **EUROPEAN PATENT APPLICATION**

(43) Date of publication:
**14.02.2024 Bulletin 2024/07**

(21) Application number: **23169640.2**

(22) Date of filing: **24.04.2023**

(51) International Patent Classification (IPC):
**G06F 16/182** (2019.01)    **H04L 67/06** (2022.01)

(52) Cooperative Patent Classification (CPC):
**H04L 67/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 CN 202210964386**

(71) Applicants:
- **China Three Gorges Corporation
  Wuhan, Hubei 430010 (CN)**
- **Three Gorges Hi-Tech Information
  Technology Co., Ltd.
  Beijing 101100 (CN)**

(72) Inventors:
- **JIN, Heping
  Wuhan, 430010 (CN)**
- **ZHU, Qiang
  Wuhan, 430010 (CN)**
- **CHEN, Yunpeng
  Wuhan, 430010 (CN)**

- **WANG, Jiandong
  Wuhan, 430010 (CN)**
- **GU, Bin
  Wuhan, 430010 (CN)**
- **LIU, Xiaoqing
  Wuhan, 430010 (CN)**
- **TIAN, Wu
  Wuhan, 430010 (CN)**
- **ZHAO, Kun
  Wuhan, 430010 (CN)**
- **ZHOU, Can
  Wuhan, 430010 (CN)**
- **PAN, Jianchu
  Wuhan, 430010 (CN)**
- **ZHANG, Xiaomeng
  Wuhan, 430010 (CN)**
- **JIANG, Peng
  Wuhan, 430010 (CN)**
- **XI, Lanyun
  Wuhan, 430010 (CN)**

(74) Representative: **Barker Brettell LLP
100 Hagley Road
Edgbaston
Birmingham, West Midlands B16 8QQ (GB)**

(54) **A FILE TRANSMITTING METHOD AND APPARATUS**

(57) A file transmitting method and apparatus is disclosed. The method comprises: receiving an asynchronous upload request sent from a front-end, and receiving a plurality of the fragment files uploaded by the front-end after the asynchronous upload request being responded; wherein, the plurality of the fragment files are generated by means of dividing the transmission files by the front-end; performing multithreaded storage on the plurality of the fragment files to generate a file storage execution result, and sending the file storage execution result to the front-end; receiving a file merging request sent from the front-end, and merging the plurality of fragment files based on the file merging request to generate a storage file; wherein, the file merging request is generated by the front-end based on the file storage execution result. The present method improves the transmission speed of files, avoids the problem of synchronous request users waiting timeout, and allows the user to perform other business data processing while transmitting files, effectively saving waiting time for business processing.

receiving an asynchronous upload request sent from a front-end, and receiving a plurality of fragment files uploaded by the front-end after responding to the asynchronous upload request, wherein, the plurality of fragment files are generated in manner of dividing transmission files by the front-end — S101

performing multithreaded storage on the plurality of fragment files to generate a file storage execution result, and sending the file storage execution result to the front-end — S102

receiving a file merging request sent from the front-end, and merging the plurality of fragment files based on the file merging request to generate a storage file, wherein, the file merging request is generated by the front-end based on the file storage execution result — S103

acquiring a file preview request, obtaining the storage file based on the file preview request, and preprocessing the storage file to generate a preview file, and transmitting the preview file to the front-end for display — S104

FIG.1

**Description**

**CROSS REFERENCE TO RELATED APPLICATIONS**

This application claims priority to Chinese Patent Application No. 202210964386.2 filed on August 11, 2022 and entitled "A File Transmitting Method and Apparatus", the entire disclosure of which are incorporated herein by reference.

**TECHNICAL FIELD**

the present application relates to data transmitting technology field, and particularly relates to a file transmitting method and apparatus.

**BACKGROUND**

The Hyper Text Transfer Protocol (HTTP) or the File Transfer Protocol (FTP) is usually used in a system of Browser/Server Architecture (B/S Architecture) for uploading and downloading a file. Generally, a document type file is converted into the Portable Document Format (PDF) or a picture format to implement an online preview function.
However, in a digital delivery scenario of Internet Data Center (IDC) project engineering, there are many types of files and larger file entities, so using a conventional approach to upload and download a file is limited by file size and network bandwidth and other factors, the speed thereof is difficult to be ensured and application usage requirements cannot be satisfied.

**SUMMARY**

Hence, the technical problem to be solved of the present disclosure is to overcome a deficiency in prior art, of which the speed of uploading and downloading a big file by a conventional way is limited by file size and network bandwidth and other factors, so that the speed is difficult to be ensured and application usage requirements cannot be satisfied, then a file transmitting method and apparatus are thus provided.
A file transmitting method provided by an embodiment of the present disclosure, applying to a server, comprises:

receiving an asynchronous upload request sent from a front-end, and receiving a plurality of fragment files uploaded by the front-end after responding to the asynchronous upload request; wherein, the plurality of fragment files are generated in manner of dividing transmission files by the front-end; wherein, the asynchronous upload request comprises: a fragment address, a fragment serial number, a fragment size of upload, and a total number of fragments; performing multithreaded storage on the plurality of fragment files to generate a file storage execution result, and sending the file storage execution result to the front-end;
receiving a file merging request sent from the front-end, and merging the plurality of fragment files based on the file merging request to generate a storage file; wherein, the file merging request is generated by the front-end based on the file storage execution result.

A file transmitting method provided by the present disclosure, reduces file size of a single upload request and improves transmission speed of a file by dividing a transmission file into fragment files to split a large file, and, asynchronous upload and storage of the transmission file is completed based on the asynchronous upload request and multithreaded storage, problem of page waiting timeout or browser memory crash caused by large file transmission in a browser-end can be effectively resolved. Meanwhile, a problem of waiting timeout of an asynchronous request user is avoided, a user can deal with other business data while transmitting files, and waiting time of business processing is effectively saved.
In some embodiments, the asynchronous upload request, comprises:
a fragment address, a fragment serial number, an upload fragment size, and a total number of fragments.
In some embodiments, the step of multithreaded storing the plurality of fragment files based on the asynchronous upload request, to generate a file storage execution result, comprises:

acquiring a file storage deployment type, and performing multithreaded storage on the plurality of fragment files respectively based on the file storage deployment type and the fragment size;
comparing the number of the fragment files after multithreaded storage with the total number of fragments in the asynchronous upload request, and generating the file storage execution result when the number of the fragment files after multithreaded storage is equal to the total number of fragments in the asynchronous upload request.

The above performing multithreaded storage on fragment files, sufficiently uses network bandwidth and processing ability of a server, improves storage capacity, and reduces user waiting time.

In some embodiments, the step of performing multithreaded storage on the plurality of fragment files respectively based on the file storage deployment type and the fragment size, comprises:

comparing the fragment size with the preset storage size when the file storage deployment type is multi-server storage; when the fragment size is greater than the preset storage size, generating a number of asynchronous threads in accordance with the fragment size and the preset storage size, and storing the plurality of the fragment files based on the number of asynchronous threads.

In some embodiments, further comprises:

acquiring a file preview request by the server, obtaining the transmission file based on the file preview request, and preprocessing the transmission file to generate a preview file, and transmitting the preview file to the front-end for display.

In some embodiments, the step of preprocessing the transmission file to generate a preview file, and transmitting the preview file to the front-end for display, comprises:

determining a type of the storage file, when the type of the storage file is a picture type file or a plain text type file, transmitting the picture type file and the plain text type file to the front-end for display;

when the type of the storage file is an electronic document type file, then converting the electronic document type file into a portable document file;

comparing the file size of the portable documents file with a preset threshold value, when the file size of the portable document file is greater than the preset threshold value, then performing document pagination on the portable document file to generate a portable pagination document, and transmitting the portable pagination document to the front-end for pagination display.

The above of converting the electronic document type file into a portable document file for pagination, avoids a problem such as request size is too large, memory overflow, and request timeout under a limited bandwidth condition, ensuring transmission speed and extremely reducing response time.

In a second facet of the present application, a file transmitting method is further provided, applying to a front-end, comprising:

acquiring a transmission file, dividing the transmission file to generate a plurality of fragment files, and initiating an asynchronous upload request to a server, and uploading the plurality of fragment files after receiving a response from the server; wherein, the server is configured to generate a file storage execution result through storing the plurality of fragment files by multi-thread;

receiving the file storage execution result sent from the server, and sending a file merging request to the server based on the file storage execution result; the server is configured to merge the plurality of fragment files based on the file merging request to generate a storage file.

In some embodiments, the step of dividing the transmission file to generate a plurality of fragment files, comprises:

comparing the file size of the transmission file with a preset fragment size, when the file size of the transmission file is greater than the preset fragment size, dividing the transmission file based on the preset fragment size to generate the plurality of fragments.

The step of dividing the transmission file based on the preset fragment size, thereby a big file is divided, to improve transmission speed of a file.

In a third facet of the present application, a file transmitting apparatus is further provided, applying to a server, comprising:

a receiving module, configured to receive an asynchronous upload request sent from a front-end, and receive a plurality of fragment files uploaded by the front-end after responding to the asynchronous upload request; wherein, the plurality of fragment files are generated in manner of dividing transmission files by the front-end;

a storage module, configured to perform multithreaded storage on the plurality of the fragment files to generate a file storage execution result, and send the file storage execution result to the front-end;

a merging module, configured to receive a file merging request sent from the front-end, and merge the plurality of fragment files based on the file merging request to generate a storage file; wherein, the file merging request is generated by the front-end based on the file storage execution result.

In some embodiments, the asynchronous upload request, comprises:

a fragment address, a fragment serial number, an upload fragment size, and a total number of fragments.

In some embodiments, the storage module, comprises:

a storage unit, configured to acquire a file storage deployment type, and perform multithreaded storage on the plurality of fragment files respectively based on the file storage deployment type and the fragment size;

a comparison unit, configured to compare the number of the fragment files after multithreaded storage with the total number of fragments in the asynchronous upload request, and generate the file storage execution result when the number of the fragment files after multithreaded storage is equal to the total number of fragments in the asynchronous upload request.

In some embodiments, the storage unit, comprises:
comparing the fragment size with the preset storage size when the file storage deployment type is multi-server storage; when the fragment size is greater than the preset storage size, generating a number of asynchronous threads in accordance with the fragment size and the preset storage size, and storing the plurality of the fragment files based on the number of asynchronous threads.

In some embodiments, further comprise:
a preview module, configured to acquire a file preview request, obtain the transmission file based on the file preview request, and preprocess the transmission file to generate a preview file, and transmit the preview file to the front-end for display.

In some embodiments, the preview module, comprises:

a determining unit, configured to determine a type of the storage file, when the type of the storage file is a picture type file or a plain text type file, to transmit the picture type file and the plain text type file to the front-end for display;

a converting unit, configured to convert the electronic document type file into a portable document file when the type of the storage file is an electronic document type file;

a paginating unit, configured to compare the file size of the portable documents file with a preset threshold value, when the file size of the portable document file is greater than the preset threshold value, then to perform document pagination on the portable document file to generate a portable pagination document, and to transmit the portable pagination document to the front-end for pagination display.

In a fourth facet of the present application, a file transmitting apparatus is provided, applying to a front-end, comprising:

a fragmentating module, configured to acquire a transmission file, to divide the transmission file to generate a plurality of fragment files, and to initiate an asynchronous upload request to a server, and to upload the plurality of fragment files after receiving a response from the server; wherein, the server is configured to generate a file storage execution result through storing the plurality of fragment files by multi-thread;

an obtaining module, configured to receive the file storage execution result sent from the server, and to send a file merging request to the server based on the file storage execution result; the server is configured to merge the plurality of fragment files based on the file merging request to generate a storage file.

In some embodiments, the fragmentating module, comprises:
comparing the file size of the transmission file with a preset fragment size, when the file size of the transmission file is greater than the preset fragment size, dividing the transmission file based on the preset fragment size to generate the plurality of fragments.

## DESCRIPTION OF THE DRAWINGS

In order to further illustrate specific embodiments of the present disclosure or the technical solutions in prior art, drawings needed in detailed description of specific embodiments or prior art will be briefly introduced below. It is obvious that the drawings in the following description are some embodiments of the present disclosure, and an ordinary skilled person in the art can obtain other drawings without creative work based on these drawings.

FIG. 1 is a flowchart of a file transmitting method according to the embodiment 1 of the present disclosure;
FIG. 2 is a schematic diagram of a file transmitting method according to the embodiment 1 of the present disclosure;
FIG. 3 is a flowchart of step S102 in the embodiment 1 of the present disclosure;
FIG. 4 is a flowchart of step S104 in the embodiment 1 of the present disclosure;
FIG. 5 is a flowchart of a file transmitting method according to the embodiment 2 of the present disclosure;
FIG. 6 is a schematic diagram of a file transmitting apparatus according to the embodiment 3 of the present disclosure;

FIG. 7 is a schematic diagram of a file transmitting apparatus according to the embodiment 4 of the present disclosure.

**DETAILED DESCRIPTION OF SPECIFIC EMBODIMENTS**

The present disclosure will be described clearly and completely in combination with the drawings. Obviously, described embodiments are only a partial rather than all embodiments of the present disclosure. Based on the embodiments of the present disclosure, all other embodiments obtained by an ordinary skilled person in the art without creative effort belong to the scope of the present disclosure.

In the description of the present disclosure, it should be noted that the terms such as "center", "upper", "lower", "left", "right", "vertical", "horizontal", "inner", "outer", and etc., indicating the direction or positional relationship are based on the direction or positional relationship shown in the drawings, for the purpose of describing and simplifying the present disclosure, and do not indicate or imply that the system or components referred to must have a specific orientation, and be constructed or operated in the specific orientation, and therefore cannot be understood as limiting the present disclosure. In addition, the terms "first", "second", and "third" are only used for describing purpose, rather than understanding as indicating or implying relative importance.

Furthermore, technical features involved in different embodiments of the present disclosure described below can be combined with each other as long as they do not conflict with each other.

Embodiment 1

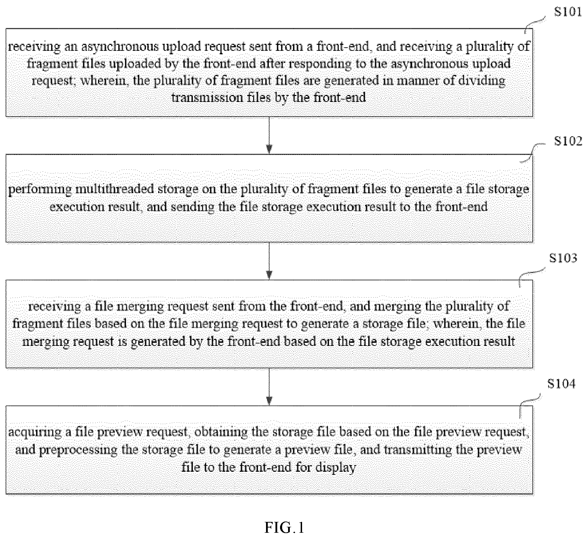

This embodiment provides a file transmitting method applied to a server, as shown in Figures 1-2, comprising: S101, receiving an asynchronous upload request sent from a front-end, and receiving a plurality of fragment files uploaded by the front-end after responding to the asynchronous upload request; wherein, the plurality of fragment files are generated in manner of dividing transmission files by the front-end.

Specifically, the asynchronous upload request comprises: a fragment address (a file name + a file serial number + a verification value of file size), a fragment serial number, a fragment size, and a total number of fragments, wherein, the verification value of file size uses Message-Digest Algorithm 5 (MD5, a widely used cryptographic hash function).

S102, performing multithreaded storage on the plurality of fragment files to generate a file storage execution result, and sending the file storage execution result to the front-end.

Furthermore, after the server received an asynchronous upload request, determining whether a single threaded or multithreaded upload is performed according to size of a fragment file, and a file storage execution result (comprising, a file fragment ID and whether the upload is succeeded) is fed back after the upload is finished.

S103, receiving a file merging request sent from the front-end, and merging the plurality of fragment files based on the file merging request to generate a storage file; wherein, the file merging request is generated by the front-end based on the file storage execution result.

Specifically, the server verifies whether the plurality of fragment files are all existed, the merging is performed and an execution result is returned thereby when the plurality of fragment files are all existed, and the front-end updates upload progress according to the execution result, closes an upload panel, and returns the execution result for the component caller to complete subsequent business logic processing.

The abovementioned file transmitting method, reduces file size of a single upload request and improves transmission speed of a file by dividing a transmission file into fragment files to split a large file, and, asynchronous upload and storage of the transmission file is completed based on the asynchronous upload request and multithreaded storage, problem of page waiting timeout or browser memory crash, caused by large file transmission in a browser-end, can be effectively resolved. Meanwhile, a problem of waiting timeout of an asynchronous request user is avoided, a user can deal with other business data while transmitting files, and waiting time of business processing is effectively saved.

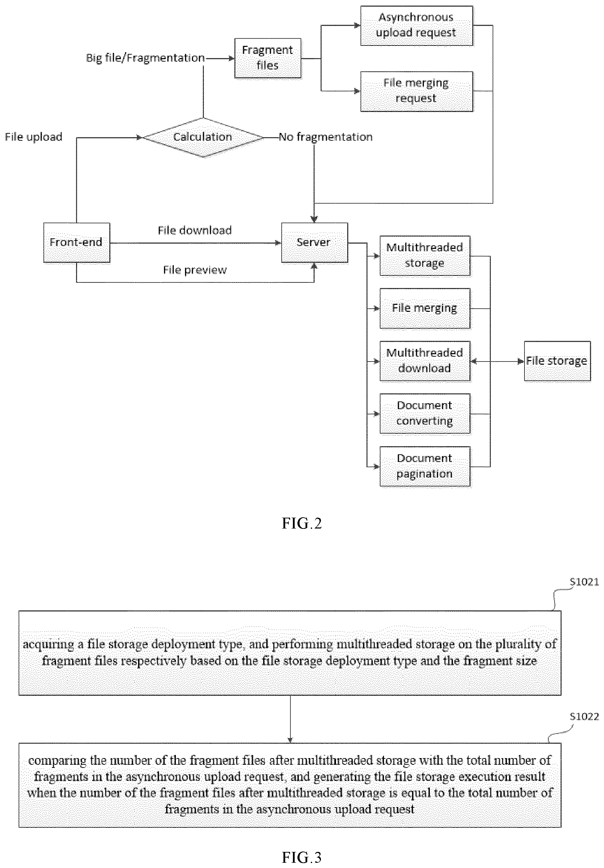

In some embodiments, as shown in FIG. 3, performing multithreaded storage on the plurality of the fragment files to generate a file storage execution result based on the asynchronous upload request in the step of S102, comprises: S1021, acquiring a file storage deployment type, and performing multithreaded storage on the plurality of fragment files respectively based on the file storage deployment type and the fragment size.

Specifically, the fragment size is compared with a preset storage size when the file storage deployment type is multi-server storage, a number of asynchronous threads are generated according to the fragment size and the preset storage size when the fragment size is greater than the preset storage size, and the plurality of fragment files are stored based on the number of asynchronous threads.

Furthermore, the server determines whether to perform multithreaded storage based on the file storage deployment type (single-server storage and multi-server storage), the size of the transmitted file (i.e., the size of each fragment file transmitted each time), and the network bandwidth limitation between servers. Specifically, when server-side data processing and file storage service are deployed on a same server, single-threaded storage can be directly used without being limited by network. The preset storage size is set based on network bandwidth, and the setting process is consistent with the setting process of the minimum fragmentation principle.

Furthermore, when a transmission is interrupted, the server compares the MD5 verification value of a fragment file waiting for transmission with that of the last transmitted fragment file. When the same they are, both fragment files are considered to belong to a same transmission file, an operating success is directly returned, and the fragment file waiting for transmission keeps uploading; when not the same they are, the server completes storage of the fragment file on a file server and returns a storage execution result, and then obtains a next transmission file.

S 1022, comparing the number of the fragment files after multithreaded storage with the total number of fragments in the asynchronous upload request, and generating the file storage execution result when the number of the fragment files after multithreaded storage is equal to the total number of fragments in the asynchronous upload request.

In some embodiments, further comprises:
S104, acquiring a file preview request, obtaining the storage file based on the file preview request, and preprocessing the storage file to generate a preview file, and transmitting the preview file to the front-end for display.

Furthermore, when a user selects a file record to preview on a front-end, the front-end initiates a file preview request, and the server receives the file preview request and checks whether the requested file (i.e., a transmission file) exists in a local cache. when the requested file is existed, the server directly returns a file stream and continues to perform pre-processing on the transmission file; when the requested file is not existed, multithreaded file downloading is performed, and the front-end waits for the file stream to be fully downloaded before prompting the user to save the file; wherein, specific steps for multithreaded file downloading are as follows: according to fragment size of a thread file (which can be set manually in advance or set using the minimum fragmentation principle), the number of fragments is calculated by dividing the size of the file to be downloaded by the fragment size of the thread file, and the download threads are created according to the number of fragments of the file for completing large file fragmentation download and improving file reading speed.

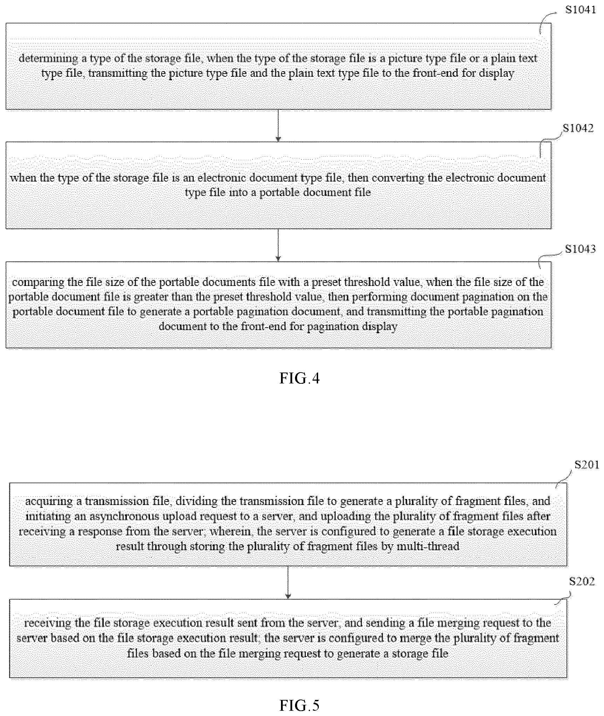

In some embodiments, as shown in FIG. 4, "preprocessing the storage file to generate a preview file, and transmitting the preview file to the front-end for display." in the step S104, comprises:
S 1041, determining a type of the storage file, when the type of the storage file is a picture type file or a plain text type file, transmitting the picture type file and the plain text type file to the front-end for display.

Therein, types of storage files comprise picture type file, plain text type file (TXT), and electronic document type file (OFFICE).

Specifically, when the type of the storage file is picture type file or plain text type file, a cache address of the transmission file on the server is directly returned (downloading and caching from the file server is required when the server has no cached file), and the transmission file is retrieved to a front-end and the front-end directly renders and displays the transmission file.

S 1042, when the type of the storage file is an electronic document type file, converting the electronic document type file into a portable document file.

Specifically, the server converts an OFFICE (electronic document type) file into a PDF (portable document) file.

S1043, comparing the file size of the portable documents file with a preset threshold value, when the file size of the portable document file is greater than the preset threshold value, then performing document pagination on the portable document file to generate a portable pagination document, and transmitting the portable pagination document to the front-end for pagination display.

Specifically, when the size of an OFFICE file exceeding a limit value (i.e., a preset threshold value, generally is 2 megabytes, and may be adjusted in accordance with a bandwidth of the server), the corresponding PDF file for the OFFICE file is paginated, and a pagination document stream is returned, the server relies on PDDocument utility class (a tool for creating a PDF document) to complete loading of a PDF file, and after using a PDF reader to read and render the content of the PDF file completely, uses the rendering function to read the contents of the specified page range, for example, the function: renderer.renderImage(page, scale), i.e., rendering, import and save rendering (page number, scale ratio).

Furthermore, a front-end receives a PDF type file, and invokes a PDF preview component for pagination viewing.

Furthermore, except for picture type file, plain text type file, and electronic document type file, other files are directly returned to file download stream, the front-end performs a file download prompt, and the choice of determining whether the file is locally saved and viewed is left to a user.

Embodiment 2

the present embodiment provides a file transmitting method, applied to a front-end, as shown in FIG. 5, which comprises:
S201, acquiring a transmission file, dividing the transmission file to generate a plurality of fragment files, and initiating an asynchronous upload request to a server, and uploading the plurality of fragment files after receiving a response from the server; wherein, the server is configured to generate a file storage execution result through storing the plurality of fragment files by multi-thread.

Wherein, as shown in FIG. 2, comparing the file size of the transmission file with a preset fragment size, when the file size of the transmission file is greater than the preset fragment size, dividing the transmission file based on the preset fragment size to generate the plurality of fragments, and an asynchronous upload request is appended to respective fragment files, and fragment files are uploaded in turn to the server according to a time sequence of fragment files; the transmission file is directly uploaded to the server when the file size of the transmission file is less than or equal to the preset fragment size.

Wherein, the fragmentation by the front-end subjects to the minimum fragmentation principle (generally, 5 megabytes per fragment) according to the size of the transmission file, when the transmission file is uploaded.

Generally, to a network with 1 megabyte (1 M) bandwidth, the file transmission speed thereon is:

$$V=1*1024/8=128KB/S=0.125M/S,$$

in which, KB/S represents kilobytes per second, M/S represents megabits per second.

In a situation of 10M bandwidth, the theoretical transmission speed is: V=1.25M/S, if the theoretical time consumption of a 5M file which completes transmission is: T=5/1.25=4S, but due to network loss, applications concurrency, server management and other requirements , the actual transmission speed will be low.

Then, the minimum fragmentation principle is: after measuring and calculating transmission speed of different network bandwidths, taking the minimum integer of the theoretical transmission speed that does not exceed the limited bandwidth as a benchmark, and rounding up the transmission time to a limit that does not exceed 50% of the theoretical transmission time, the size of a fragment file is valued as E:

$$E=Math.ceil(B/Math.floor(V)*0.5),$$

in which, B represents a bandwidth size (unit: Mbps, megabits per second), Math.floor represents a function in a mathematical function library, Math.floor(x) represents the maximum integer returned less than the parameter x, i.e., rounding down a floating number, Math.ceil represents a function in Lua (a scripting language), Math.ceil(x) represents the minimum integer returned greater than or equal to the parameter x, i.e., rounding up a floating number, when a single file size is greater than a fragment limit, then an operation of fragmentation is performed, otherwise a single file transmission is performed.

For an example with 10M bandwidth, the size of fragment files is valued as:

$$E = Math.ceil(10/Math.floor(1.25)*0.5) = 5M,$$

i.e., the fragment limit is 5M, when file size exceeds 5M, the fragmentation is then performed.

Furthermore, the front-end listens upload process of fragments, and dynamically updates a progress bar of online.

S202, receiving the file storage execution result sent from the server, and sending a file merging request to the server based on the file storage execution result; the server is configured to merge the plurality of fragment files based on the file merging request to generate a storage file.

Specifically, the front-end waits for successful transmission of the plurality of fragment files, and then obtains the file merging request.

Embodiment 3

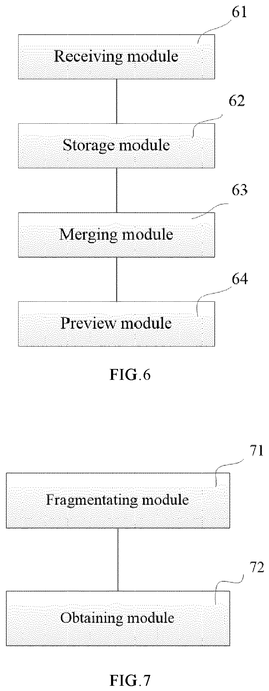

The present embodiment provides a file transmitting apparatus, applying to a server, as shown in FIG. 6, comprising:

a receiving module 61, configured to receive an asynchronous upload request sent from a front-end, and receiving a plurality of fragment files uploaded by the front-end after responding to the asynchronous upload request; wherein, the plurality of fragment files are generated in manner of dividing transmission files by the front-end.

Specifically, the asynchronous upload request comprises: a fragment address (a file name + a file serial number + a verification value of file size), a fragment serial number, a fragment size, and a total number of fragments, wherein, the verification value of file size uses a Message-digest Algorithm (MD5, a widely used cryptographic hash function) verification value.

A storage module 62, configured to perform multithreaded storage on the plurality of the fragment files to generate a file storage execution result, and sending the file storage execution result to the front-end.

Furthermore, after the server received an asynchronous upload request, determining whether a single threaded or multithreaded upload is performed according to size of a fragment file, and a file storage execution result (comprising, a file fragment ID and whether the upload is succeeded) is fed back after the upload is finished.

A merging module 63, configured to receive a file merging request sent from the front-end, and merge the plurality of fragment files based on the file merging request to generate a storage file; wherein, the file merging request is generated by the front-end based on the file storage execution result.

Specifically, the server verifies whether the plurality of fragment files are all existed, the merging is performed and an execution result is returned thereby when the plurality of fragment files are all existed, and the front-end updates upload progress according to the execution result, closes an upload panel, and returns for the component caller to complete subsequent business logic processing.

The abovementioned file transmitting method, reduces file size of a single upload request and improves transmission speed of a file by dividing a transmission file into fragment files to split a large file, and, asynchronous upload and storage of the transmission file is completed based on the asynchronous upload request and multithreaded storage, problems of page waiting timeout or browser memory crash, caused by large file transmission in a browser-end, can be effectively resolved. Meanwhile, a problem of waiting timeout of an asynchronous request user is voided, a user can deal with other business data while transmitting files, and waiting time of business processing is effectively saved.

In some embodiments, the storage module 62, comprises:

a storage unit 621, configured to acquire a file storage deployment type, and perform multithreaded storage on the plurality of fragment files respectively based on the file storage deployment type and the fragment size.

Specifically, the fragment size is compared with a preset storage size when the file storage deployment type is multi-server storage, a number of asynchronous threads are generated according to the fragment size and the preset storage size when the fragment size is greater than the preset storage size, and the plurality of fragment files are stored based on the number of asynchronous threads.

Furthermore, the server determines whether to perform multithreaded storage based on the file storage deployment type (single-server storage and multi-server storage), the size of the transmitted file (i.e., the size of each fragment file transmitted each time), and the network bandwidth limitation between servers. Specifically, when server-side data processing and file storage service are deployed on a same server, single-threaded storage can be directly used without being limited by network. The preset storage size is set based on network bandwidth, and the setting process is consistent with the setting process of the minimum fragmentation principle.

Furthermore, when a transmission is interrupted, the server compares the MD5 verification value of a fragment file waiting for transmission with that of the last transmitted fragment file. When the same they are, both fragment files are considered to belong to a same transmission file, an operating success is directly returned, and the fragment file waiting for transmission keeps uploading; when not the same they are, the server completes storage of the fragment file on a file server and returns a storage execution result, and then obtains a next transmission file.

A comparison unit 622, configured to compare the number of the fragment files after multithreaded storage with the total number of fragments in the asynchronous upload request, and generate the file storage execution result when the number of the fragment files after multithreaded storage is equal to the total number of fragments in the asynchronous upload request.

In some embodiments, further comprises:

a preview module 64, configured to acquire a file preview request, and obtain the storage file based on the file preview request, and preprocess the storage file to generate a preview file, and transmit the preview file to the front-end for display.

Furthermore, when a user selects a file record to preview on a front-end, the front-end initiates a file preview request, and the server receives the file preview request and checks whether the requested file (i.e., a transmission file) exists in a local cache. when the requested file is existed, the server directly returns a file stream and continues to perform pre-processing on the transmission file; when the requested file is not existed, multithreaded file downloading is performed, and the front-end waits for the file stream to be fully downloaded before prompting the user to save the file; wherein, specific steps for multithreaded file downloading are as follows: according to fragment size of a thread file (which can be set manually in advance or set using the minimum fragmentation principle), the number of fragments is calculated by dividing the size of the file to be downloaded by the fragment size of the thread file, and the download threads are created according to the number of fragments of the file for completing large file fragmentation download, and improving file reading speed.

In some embodiments, the preview module 64, comprises:

a determining unit 641, configured to determine the type of the storage file, when the type of the storage file is a picture type file or a plain text type file, to transmit the picture type file and the plain text type file to the front-end for display.

Therein, types of storage files comprise picture type file, plain text type file (TXT), and electronic document type file (OFFICE).

Specifically, when the type of the storage file is picture type file or plain text type file, a cache address of the transmission file on the server is directly returned (downloading and caching from the file server is required when the server has no cached file), and the transmission file is retrieved to a front-end and the front-end directly renders and displays the transmission file.

A converting unit 642, configured to convert the electronic document type file into a portable document file when the type of the storage file is an electronic document type file.

Specifically, the server converts an OFFICE (electronic document type) file into a PDF (portable document) file.

A paginating unit 643, configured to compare the file size of the portable documents file with a preset threshold value, when the file size of the portable document file is greater than the preset threshold value, then to perform document pagination on the portable document file to generate a portable pagination document, and to transmit the portable pagination document to the front-end for pagination display.

Specifically, when the size of an OFFICE file exceeding a limit value (i.e., a preset threshold value, generally, is 2 megabytes, and may be adjusted in accordance with a bandwidth of the server), the corresponding PDF file for the OFFICE file is paginated, and a pagination document stream is returned, the server relies on PDDocument utility class (a tool for creating a PDF document) to complete loading of a PDF file, and after using a PDF reader to read and render the content of the PDF file completely, uses the rendering function to read the contents of the specified page range, for example, the function: renderer.renderImage(page, scale), i.e., rendering, import and save rendering (page number, scale ratio).

Furthermore, a front-end receives the PDF type file, and invokes the PDF preview component for pagination viewing .

Furthermore, except for picture type file, plain text type file, and electronic document type file, other files are directly returned to file download stream, the front-end performs a file download prompt, and the choice of determining whether the file is locally saved and viewed is left to a user.

Embodiment 4

The present embodiment provides a file transmitting apparatus, applying to a front-end, as shown in FIG. 7, comprising:

a fragmentating module 71, configured to acquire a transmission file, to divide the transmission file to generate a plurality of fragment files, and to initiate an asynchronous upload request to a server, and to upload the plurality of fragment files after receiving a response from the server; wherein, the server is configured to generate a file storage execution result through storing the plurality of fragment files by multi-thread.

Wherein, comparing the file size of the transmission file with a preset fragment size, when the file size of the transmission file is greater than the preset fragment size, dividing the transmission file based on the preset fragment size to generate the plurality of fragments, and an asynchronous upload request is appended to respective fragment files, and fragment files are uploaded in turn to the server according to a time sequence of fragment files; the transmission file is directly uploaded to the server when the file size of the transmission file is less than or equal to the preset fragment size.

Wherein, the fragmentation by the front-end subjects to the minimum fragmentation principle (generally, 5 megabytes per fragment) according to the size of the transmission file, when the transmission file is uploaded.

Generally, to a network with 1 megabyte (1 M) bandwidth, the file transmission speed thereon is:

$$V=1*1024/8=128KB/S=0.125M/S,$$

in which, KB/S represents kilobytes per second, M/S represents megabits per second.

In a situation of 10M bandwidth, the theoretical transmission speed is: V=1.25M/S, if the theoretical time consumption of a 5M file which completes transmission is: T=5/1.25=4S, but due to network loss, applications concurrency, server management and other requirements, the actual transmission speed will be low.

Then, the minimum fragmentation principle is: after measuring and calculating transmission speed of different network bandwidths, taking the minimum integer of the theoretical transmission speed that does not exceed the limited bandwidth as a benchmark, and rounding up the transmission time to a limit that does not exceed 50% of the theoretical transmission time, the size of a fragment file is valued as E:

$$E=Math.ceil(B/Math.floor(V)*0.5),$$

in which, B represents a bandwidth size (unit: Mbps, megabits per second), Math.floor represents a function in a mathematical function library, Math.floor(x) represents the maximum integer returned less than the parameter x, i.e., rounding down a floating number, Math.ceil represents a function in Lua (a scripting language), Math.ceil(x) represents the minimum integer returned greater than or equal to the parameter x, i.e., rounding up a floating number, when a single file size is greater than a fragment limit, then an operation of fragmentation is performed, otherwise a single file transmission is performed.

For an example with 10M bandwidth, the size of fragment files is valued as:

$$E = Math.ceil(10/Math.floor(1.25)*0.5) = 5M,$$

i.e., the fragment limit is 5M, when file size exceeds 5M, the fragmentation is then performed.

Furthermore, the front-end listens upload process of fragments, and dynamically updates a progress bar of online.

An obtaining module 72, configured to receive the file storage execution result sent from the server, and to send a file merging request to the server based on the file storage execution result; the server is configured to merge the plurality of fragment files based on the file merging request to generate a storage file.

Specifically, the front-end waits for successful transmission of the plurality of fragment files, and then obtains the file merging request.

The various embodiments in the specification are described in a progressive manner, and each embodiment focuses on the differences from other embodiments. Similar or identical parts among different embodiments in this specification may be referenced to each other.

It should be understood by a person skilled in the art that the embodiments of the present disclosure can be provided as a method, an apparatus, or a computer program product. Therefore, the present disclosure can be implemented in the form of a fully hardware embodiment, a fully software embodiment, or a combination of software and hardware embodiments. Moreover, the present disclosure can be implemented in the form of a computer program product that includes one or more computer-readable storage media (including but not limited to magnetic storage, CD-ROMs, optical storage, etc.) containing computer-executable program code.

The present disclosure is described with reference to flowcharts and/or block diagrams of methods, apparatus (systems), and computer program products according to embodiments of the present disclosure. It should be understood that each process of the flowcharts and/or each block of the block diagrams and the combination or a process and/or a block in flowcharts and/or block diagrams, can be implemented by computer program instructions. And these computer program instructions can be provided to a processor of a general-purpose computer, a special-purpose computer, an embedded processor, or other programmable data processing device to produce a machine that the instructions executed by the processors of computers or other programmable data processing devices performs the functionality specified in one or more processes of the flowcharts and/or specified in one or more blocks of the block diagrams.

The computer program instructions can also be stored in a computer-readable memory that can guide a computer or other programmable data processing device to operate in a specific manner, such that the instructions stored in the computer-readable memory produce a manufactured product, including an instruction system that implements one or more processes of the flowcharts and/or the functionality specified in the\one or more blocks of the block diagrams.

The computer program instructions can also be loaded onto a computer or other programmable data processing device, such that a series of operational steps performed on the computer or other programmable device produce computer-executed processing, and the instructions executed on the computer or other programmable device provide steps for implementing one or more processes of the flowcharts and/or the functionality specified in one or more blocks of the block diagrams.

Obviously, the above-described embodiments are provided only for the purpose of illustrating the present disclosure, and not intended to limit the embodiments of the present disclosure. Those skilled in the art can make various modifications or variations based on the above description. There is no need or inability to exhaustively list all implementations here, and all such obvious modifications or variations are within the scope of the present disclosure.

**Claims**

1. A file transmitting method, applying to a server, **characterized in** comprising:

receiving an asynchronous upload request sent from a front-end, and receiving a plurality of fragment files uploaded by the front-end after responding to the asynchronous upload request; wherein, the plurality of fragment files are generated in manner of dividing transmission files by the front-end; wherein, the asynchronous upload request comprises: a fragment address, a fragment serial number, a fragment size of upload, and a total number of fragments;

performing multithreaded storage on the plurality of fragment files to generate a file storage execution result, and sending the file storage execution result to the front-end;

receiving a file merging request sent from the front-end, and merging the plurality of fragment files based on the file merging request to generate a storage file; wherein, the file merging request is generated by the front-end based on the file storage execution result;

wherein, the step of performing multithreaded storage on the plurality of the fragment files to generate a file storage execution result comprises:

acquiring a file storage deployment type, and performing multithreaded storage on the plurality of fragment files respectively based on the file storage deployment type and the fragment size;

comparing the number of the fragment files after multithreaded storage with the total number of fragments in the asynchronous upload request, and generating the file storage execution result when the number of the fragment files after multithreaded storage is equal to the total number of fragments in the asynchronous upload request; wherein, determining whether to perform a multithreaded storage according to the file storage deployment type, the transmission file size and network bandwidth limitation between servers, wherein, when a server-side data processing and a file storage service are deployed on a same server, a single threaded storage is used, not limited by the network; wherein, a preset storage size is set in accordance with the network bandwidth; the step of performing multithreaded storage on the plurality of fragment files respectively based on the file storage deployment type and the fragment size comprises:

comparing the fragment size with the preset storage size when the file storage deployment type is multi-server storage; when the fragment size is greater than the preset storage size, generating a number of asynchronous threads in accordance with the fragment size and the preset storage size, and storing the plurality of the fragment files based on the number of asynchronous threads.

2. The file transmitting method according to Claim 1, **characterized in** further comprising:
acquiring a file preview request, obtaining the storage file based on the file preview request, and preprocessing the storage file to generate a preview file, and transmitting the preview file to the front-end for display.

3. The file transmitting method according to Claim 2, **characterized in that**, the step of preprocessing the storage file to generate a preview file, and transmitting the preview file to the front-end for display comprises:

determining a type of the storage file, when the type of the storage file is a picture type file or a plain text type file, transmitting the picture type file and the plain text type file to the front-end for display;

when the type of the storage file is an electronic document type file, then converting the electronic document type file into a portable document file;

comparing the file size of the portable documents file with a preset threshold value, when the file size of the portable document file is greater than the preset threshold value, then performing document pagination on the portable document file to generate a portable pagination document, and transmitting the portable pagination document to the front-end for pagination display.

4. A file transmitting method, applying to a front-end, **characterized in** comprising:

acquiring a transmission file, dividing the transmission file to generate a plurality of fragment files, and initiating an asynchronous upload request to a server, and uploading the plurality of fragment files after receiving a response from the server; wherein, the server is configured to generate a file storage execution result through storing the plurality of fragment files by multi-thread; wherein, according to the size of the transmission file, the division is performed in accordance with the minimum fragmentation principle; the minimum fragmentation principle is: measuring and calculating transmission speed of different network bandwidths, taking the minimum integer of the theoretical transmission speed that does not exceed the limited bandwidth as a benchmark, and rounding up the transmission time to a limit that does not exceed 50% of the theoretical transmission time, the size of a fragment file is valued as E:

$$E=Math.ceil(B/Math.floor(V)*0.5);$$

wherein, B represents a bandwidth size, Math.floor represents a function in a mathematical function library, Math.floor(x) represents the maximum integer returned less than the parameter x, Math.ceil represents a function in a scripting language, Math.ceil(x) represents the minimum integer returned greater than or equal to the parameter x;

receiving the file storage execution result sent from the server, and sending a file merging request to the server based on the file storage execution result; the server is configured to merge the plurality of fragment files based on the file merging request to generate a storage file.

5. The file transmitting method according to Claim 4, **characterized in that**, the step of dividing the transmission file to generate a plurality of fragment files comprises:

comparing the file size of the transmission file with a preset fragment size, when the file size of the transmission file is greater than the preset fragment size, dividing the transmission file based on the preset fragment size to generate the plurality of fragments.

6. A file transmitting apparatus, applying to a server, **characterized in** comprising:

a receiving module, configured to receive an asynchronous upload request sent from a front-end, and receive a plurality of fragment files uploaded by the front-end after responding to the asynchronous upload request; wherein, the plurality of fragment files are generated in manner of dividing transmission files by the front-end; wherein, the asynchronous upload request comprises: a fragment address, a fragment serial number, a fragment size of upload, and a total number of fragments;

a storage module, configured to perform multithreaded storage on the plurality of the fragment files to generate a file storage execution result, and send the file storage execution result to the front-end;

a merging module, configured to receive a file merging request sent from the front-end, and merge the plurality of fragment files based on the file merging request to generate a storage file; wherein, the file merging request is generated by the front-end based on the file storage execution result;

wherein, the storage module comprises:

a storage unit, configured to acquire a file storage deployment type, and perform multithreaded storage on the plurality of fragment files respectively based on the file storage deployment type and the fragment size; wherein, compare the fragment size with the preset storage size when the file storage deployment type is multi-server storage; when the fragment size is greater than the preset storage size, generate a number of asynchronous threads in accordance with the fragment size and the preset storage size, and store the plurality of the fragment files based on the number of asynchronous threads, wherein, when a server-side data processing and a file storage service are deployed on a same server, a single threaded storage is used, not limited by the network; a preset storage size is set in accordance with the network bandwidth;

a comparison unit, configured to compare the number of the fragment files after multithreaded storage with the total number of fragments in the asynchronous upload request, and generate the file storage execution result when the number of the fragment files after multithreaded storage is equal to the total number of fragments in the asynchronous upload request.

7. A file transmitting apparatus, applying to a front-end, **characterized in** comprising:

a fragmentating module, configured to acquire a transmission file, dividing the transmission file to generate a plurality of fragment files, and initiating an asynchronous upload request to a server, and uploading the plurality of fragment files after receiving a response from the server; wherein, the server is configured to generate a file storage execution result through storing the plurality of fragment files by multi-thread; wherein, according to the size of the transmission file, the division is performed in accordance with the minimum fragmentation principle; the minimum fragmentation principle is: measuring and calculating transmission speed of different network bandwidths, taking the minimum integer of the theoretical transmission speed that does not exceed the limited bandwidth as a benchmark, and rounding up the transmission time to a limit that does not exceed 50% of the theoretical transmission time, the size of a fragment file is valued as E:

$$E=Math.ceil(B/Math.floor(V)*0.5);$$

wherein, B represents a bandwidth size, Math.floor represents a function in a mathematical function library, Math.floor(x) represents the maximum integer returned less than the parameter x, Math.ceil represents a function in a scripting language, Math.ceil(x) represents the minimum integer returned greater than or equal to the parameter x;

an obtaining module, configured to receive the file storage execution result sent from the server, and to send a file merging request to the server based on the file storage execution result; the server is configured to merge the plurality of fragment files based on the file merging request to generate a storage file.

S101

receiving an asynchronous upload request sent from a front-end, and receiving a plurality of fragment files uploaded by the front-end after responding to the asynchronous upload request; wherein, the plurality of fragment files are generated in manner of dividing transmission files by the front-end

S102

performing multithreaded storage on the plurality of fragment files to generate a file storage execution result, and sending the file storage execution result to the front-end

S103

receiving a file merging request sent from the front-end, and merging the plurality of fragment files based on the file merging request to generate a storage file; wherein, the file merging request is generated by the front-end based on the file storage execution result

S104

acquiring a file preview request, obtaining the storage file based on the file preview request, and preprocessing the storage file to generate a preview file, and transmitting the preview file to the front-end for display

FIG.1

FIG.2

FIG.3

S1041

determining a type of the storage file, when the type of the storage file is a picture type file or a plain text type file, transmitting the picture type file and the plain text type file to the front-end for display

S1042

when the type of the storage file is an electronic document type file, then converting the electronic document type file into a portable document file

S1043

comparing the file size of the portable documents file with a preset threshold value, when the file size of the portable document file is greater than the preset threshold value, then performing document pagination on the portable document file to generate a portable pagination document, and transmitting the portable pagination document to the front-end for pagination display

FIG.4

S201

acquiring a transmission file, dividing the transmission file to generate a plurality of fragment files, and initiating an asynchronous upload request to a server, and uploading the plurality of fragment files after receiving a response from the server; wherein, the server is configured to generate a file storage execution result through storing the plurality of fragment files by multi-thread

S202

receiving the file storage execution result sent from the server, and sending a file merging request to the server based on the file storage execution result; the server is configured to merge the plurality of fragment files based on the file merging request to generate a storage file

FIG.5

61

Receiving module

62

Storage module

63

Merging module

64

Preview module

FIG.6

71

Fragmentating module

72

Obtaining module

FIG.7

Europäisches
Patentamt

European
Patent Office

Office européen
des brevets

# EUROPEAN SEARCH REPORT

Application Number

EP 23 16 9640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 615 899 A (BEIJING CHINA POWER INF TECH ET AL.) 6 April 2021 (2021-04-06) <br> * abstract * <br> * paragraph [0008] – paragraph [0014] * <br> * paragraph [0021] – paragraph [0041] * <br> * paragraph [0053] – paragraph [0075] * <br> * paragraph [0086] * <br> * paragraph [0101] – paragraph [0110] * <br> * paragraph [0120] * <br> * claims 1,6 * <br> ----- | 1-7 | INV. <br> G06F16/182 <br> H04L67/06 |
| X | US 2021/096759 A1 (THAKKILAPATI NAGARAJA [IN] ET AL) 1 April 2021 (2021-04-01) <br> * abstract * <br> * paragraph [0012] * <br> * paragraph [0027] – paragraph [0031] * <br> * paragraph [0034] – paragraph [0035] * <br> * paragraph [0039] – paragraph [0041] * <br> * paragraph [0048] * <br> * paragraph [0053] – paragraph [0055] * <br> ----- | 1-7 | |
| A | WO 2021/003750 A1 (SHENZHEN EAGLESOUL TECH CO LTD [CN]) 14 January 2021 (2021-01-14) <br> * abstract * <br> * paragraph [0025] – paragraph [0027] * <br> * paragraph [0082] – paragraph [0085] * <br> ----- | 1-7 | TECHNICAL FIELDS SEARCHED (IPC) <br><br> G06F <br> H04L |

The present search report has been drawn up for all claims

| Place of search | Date of completion of the search | Examiner |
|---|---|---|
| The Hague | 22 November 2023 | Boyadzhiev, Yavor |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

....................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 23 16 9640

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2023

| Patent document cited in search report | | Publication date | Patent family member(s) | | Publication date |
|---|---|---|---|---|---|
| CN 112615899 | A | 06-04-2021 | NONE | | |
| US 2021096759 | A1 | 01-04-2021 | NONE | | |
| WO 2021003750 | A1 | 14-01-2021 | CN 110582764 | A | 17-12-2019 |
| | | | WO 2021003750 | A1 | 14-01-2021 |

EPO FORM P0459

For more details about this annex : see Official Journal of the European Patent Office, No. 12/82

**REFERENCES CITED IN THE DESCRIPTION**

**Patent documents cited in the description**

- CN 202210964386